# EUROPÄISCHE PATENTSCHRIFT

(11) **EP 3 289 249 B1**
(45) Veröffentlichungstag und Bekanntmachung des Hinweises auf die Patenterteilung: **13.11.2019**
(21) Anmeldenummer: 16717593.4
(22) Anmeldetag: 13.04.2016
(51) Int. Cl.: F16J 15/40, F16C 33/80, F16J 15/447

(54) **VORRICHTUNG UND VERFAHREN ZUR VERMINDERUNG VON SCHMIERMITTELVERLUSTEN AN LAGERN**
DEVICE AND METHOD FOR REDUCING LUBRICANT LOSSES IN BEARINGS
DISPOSITIF ET PROCÉDÉ PERMETTANT DE RÉDUIRE DES FUITES DE LUBRIFIANT AU NIVEAU DE PALIERS

(30) Priorität: 27.04.2015 AT 503402015
(43) Veröffentlichungstag der Anmeldung: 07.03.2018
(73) Patentinhaber: Andritz Hydro GmbH, 1120 Wien (AT)
(72) Erfinder: CONTRERAS ESPADA, Jesus, 6312 Steinhausen (CH); OKAI, Ricardo-Naoki, 5442 Fislisbach (CH); SCHOFER, Sven, 6010 Kriens (CH); NEFF, Ueli, 9058 Brülisau (CH)
(74) Vertreter: Tschinder, Thomas
(86) Internationale Anmeldenummer: PCT/EP2016/058111
(87) Internationale Veröffentlichungsnummer: WO 2016/173842

(56) Entgegenhaltungen:
- EP-A1- 0 683 338
- EP-A2- 0 285 304
- WO-A1-2008/116884
- CN-A- 104 343 473
- US-A- 1 463 018

## Beschreibung

Den Gegenstand dieser Erfindung bildet eine Vorrichtung mit einer drehbaren Welle, die in einem feststehenden Gehäuse mit Hilfe zumindest eines Wellenlagers gelagert ist, wobei das Wellenlager mit einem Schmiermittel, vorzugsweise Öl, geschmiert ist.

Bei Wellenlagern gibt es häufig das Problem, dass Schmiermittel aus dem Lager austritt und zu Verschmutzungen der Wellenumgebung führt. Solche Leckagen entstehen durch den Unterdruck, den die rotierenden Elemente in der Nähe vom Lager erzeugen oder durch Kapillarität. Diese Problematik tritt häufig auch bei Energieerzeugungsanlagen auf.

Energieerzeugungsanlagen mit Turbinen, Generatoren und Kupplungen werden in der Regel mit Wellenlagern ausgerüstet, welche eine kontaktfreie Abdichtung, häufig Labyrinth-Dichtungen, besitzen. Diese Art der Abdichtung weist sehr geringe Reibungsverluste auf, verursacht so gut wie keinen Verschleiß und ist auch für hohe Drehzahlen geeignet. Der Nachteil von berührungslosen Dichtungen ist, dass sie keine hundertprozentige Abdichtung gewährleisten. Die Schmierölversorgung für die Wellenlager erfolgt meist zentral über einen Schmieröltank. Das Schmieröl wird mittels einer Schmierölpumpe zu den Lagerstellen gepumpt. Um ein Austreten von Schmieröl an den Lagerstellen zu verhindern, ist es möglich, die Lager zu entlüften. Die Entlüftungsleitungen von den Lagern werden zusammen in den zentralen Schmieröltank eingeleitet. Ein Gebläse saugt Luft aus dem Schmieröltank ab und erzeugt dabei einen Unterdruck im Wellenlagerraum. Derartige Systeme sind oft recht aufwendig.

Zum Teil wird der Austritt von Schmieröl an Lagern auch über sogenannte Sperrluftsysteme oder Sperrluftringe verhindert. Bei diesen Systemen wird Druckluft über Leitungen bis zum Bereich vor dem jeweiligen Lager geleitet. An den Lagerenden wird so ein Druckluftpolster aufgebaut, so dass kein Öl austreten kann. Ein Teil der Druckluft gelangt in den Wellenlagerraum und über die Entlüftungsleitung in den Öltank, hierdurch entsteht ein leichter Überdruck im Tank, welcher über eine Entlüftungsöffnung abgebaut werden muss. Eine aktive Entlüftung mit einem Gebläse ist in der Regel in Verbindung mit Sperrluftsystemen nicht erforderlich.

Sperrluftsysteme sind aufwendig und erfordern einen gewissen Platzbedarf, wodurch eine Nachrüstung bestehender Anlagen mit einem Sperrluftsystem oft schwer möglich ist.

Die EP 0 683 338 A1 und die US 1 463 018 A offenbaren Wellenabdichtsysteme bei denen auf der Welle ein Gegendrucklüfter angeordnet ist, der einen gegen die Dichtungsanordnung gerichteten Staudruck erzeugt.

Der Erfindung liegt daher die Aufgabe zugrunde, eine Wellenlagerung bereitzustellen, die Öl-Leckagen an Wellenlagern verhindert oder zumindest minimiert und einen sehr einfachen Aufbau aufweist. Außerdem soll die vorliegende Erfindung auch eine Nachrüstung bestehender Anlagen ermöglichen.

Gelöst wird diese Aufgabe durch einen auf der Welle neben dem Wellenlager befestigten Ventilator, der mit der Welle mitrotiert, dabei Luft zum Wellenlager fördert und so im Bereich zwischen Ventilator und Wellenlager einen Überdruck erzeugt. Diese Luftströmung bzw. dieser Überdruck hindert das Schmiermittel, meist Öl, davor, das Lager an dieser Stelle zu verlassen. Luft, die dabei ins Lager gedrückt wird, kann das Lager an einer anderen Stelle verlassen und gegebenenfalls über einen Filter mitgerissene Ölpartikel abgefangen werden.

Es ist vorteilhaft, wenn auf beiden Seiten des Lagers jeweils ein Ventilator auf der Welle angeordnet ist.

Der erfindungsgemäße Ventilator hat einen geringen Platzbedarf, er besteht aus mehreren Teilen, die um die Welle gelegt werden und die mit Hilfe eines Spannbandes oder einer Schelle an der Welle befestigt werden. Die Befestigung mit Hilfe eines Spannbandes oder einer Schelle bittet den großen Vorteil, dass der Ventilator nachträglich an einer Welle befestigt werden kann, ohne dass die Welle dazu ausgebaut werden muss.

Der Ventilator kann dafür beispielsweise aus zwei Teilhälften bestehen, die auf die Welle gesetzt werden und mit dem Spannband oder einer Schelle befestigt werden.

Der Ventilator kann auch beispielsweise eine Vielzahl einzelner Schaufeln aufweisen, wie sie üblicherweise bei Gebläsen verwendet werden.

Es ist günstig, wenn der Überdruckbereich zwischen Ventilator und Wellenlager von einem Ring begrenzt ist, dadurch lassen sich im Überdruckbereich höhere Drücke erzeugen. Dabei ist es auch vorteilhaft, wenn ein Teil des Ventilators von diesem Ring überdeckt wird.

Der Ring ist entweder mit dem Gehäuse verbunden und somit feststehend, oder er ist mit dem äußeren Teilen des Ventilators verbunden und rotiert mit diesem mit.

Den Gegenstand dieser Erfindung bildet aber auch ein Verfahren zur Verminderung von Schmiermittel-Leckagen an Wellenlagern bei rotierenden Wellen. Dabei wird auf der Welle neben dem Wellenlager ein Ventilator befestigt, sodass bei der Rotation der Welle durch den Ventilator ein Überdruck vor dem Wellenlager erzeugt wird, wobei dadurch die Schmiermittel-Leckage aus dem Wellenlager vermindert oder unterbunden wird. Der Ventilator besteht dabei aus mehreren Teilen, beispielsweise aus zwei halbkreisförmigen Bauteilen, die um die Welle gelegt und mit einem Spannband oder einer Schelle fixiert werden.

Es kann auch auf beiden Seiten des Wellenlagers ein Ventilator befestigt werden, sodass auf beiden Lagerseiten ein Überdruck erzeugt wird.

Eine derartige Lösung eignet sich gut für bestehende Anlagen mit Öl-Leckagen, bei denen aus Platzmangel kein Sperrluftring angebracht werden kann. Der Ventilator lässt sich auch nachträglich einbauen da er über ein Spannband oder eine Schelle an der Welle befestigt wird.

Der Ventilator kann aus Kunststoff gefertigt werden, dadurch ist er sehr kostengünstig.

Der Ventilator wird vorteilhafterweise mit Hilfe eines 3D-Druckverfahrens hergestellt, zum Beispiel mit einem Laser-Sinterverfahren.

Im Folgenden wird die Erfindung anhand von Zeichnungen beschrieben. Es zeigen:
Fig. 1 einen schematischen Längsschnitt durch die erfindungsgemäße Vorrichtung;
Fig. 2 eine obere Ansicht des Ventilators;
Fig. 3 einen Längsschnitt durch den Ventilator gemäß der Linie A-A in Fig. 2;
Fig. 4 eine perspektivische Ansicht des Ventilators;

Gleiche Bezugszeichen in den Figuren bezeichnen jeweils gleiche Bauteile.

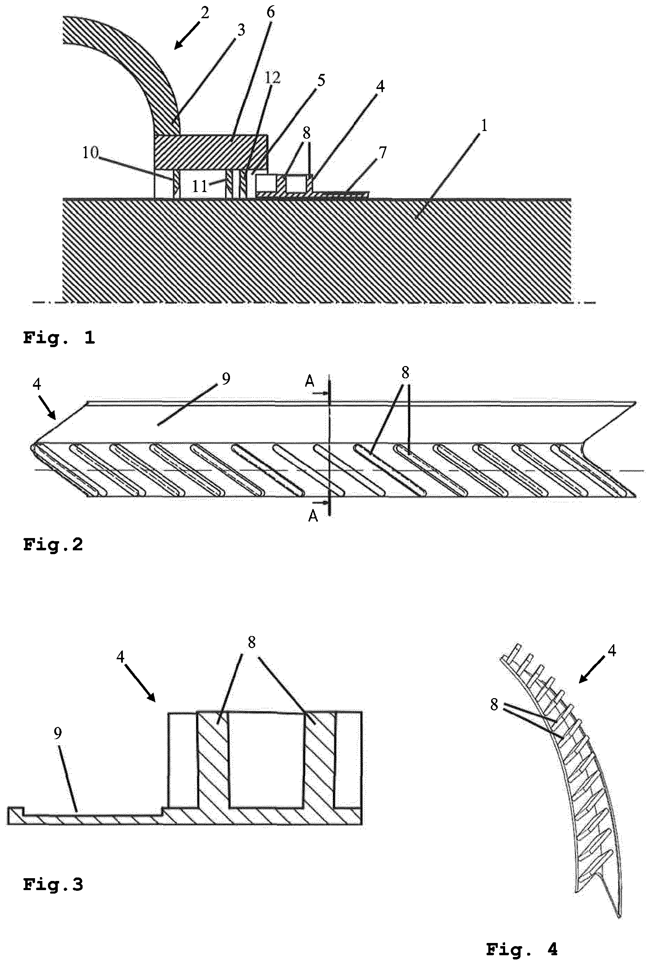

In Figur 1 ist ein Längsschnitt durch die erfindungsgemäße Vorrichtung dargestellt. Die drehbare Welle 1 ist hier in einem feststehenden Gehäuse 2 über ein Wellenlager 3 gelagert. Das Wellenlager 3 ist hier mit Öl gefüllt. Am Wellenlager 3 sind drei Dichtungen 10, 11, 12 angeordnet, die einen Schmiermittelaustritt nach rechts aus dem Lagerinneren reduzieren sollen. An der Welle 1 ist ein Ventilator 4 mit Schaufeln 8 über ein Spannband 7 befestigt. Wenn die Welle 1 rotiert, wird durch den mitrotierenden Ventilator 4 Luft in den Bereich 5 zwischen den Ventilator und dem Wellenlage 3 geblasen und somit in diesem Bereich 5 ein Überdruck erzeugt. Durch diesen Überdruck kann ein Ölaustritt aus dem Lager 3 verhindert oder zumindest reduziert werden. Der Ventilator 4 bzw. die einzelnen Schaufeln 8 werden von einem Ring 6 teilweise überdeckt. Dadurch wird der Bereich 5 gegenüber der Umgebung abgegrenzt und ein größerer Überdruckaufbau vorm Lager 3 ermöglicht.

In den Figuren 2, 3 und 4 ist der Ventilator 4 aus unterschiedlichen Ansichten dargestellt, dabei erkennt man deutlich die einzelnen Schaufeln 8, durch die Luft in den Bereich 5 geblasen wird. Neben den Schaufeln 8 ist am Ventilator 4 eine Vertiefung 9 zur Aufnahme eines Spannbandes 7 vorgesehen.

Bestehende Vorrichtungen können auch nachträglich leicht mit einem derartigen Ventilator 4 nachgerüstet werden. Der Ventilator 4 besteht aus mehreren Teilen, beispielsweise aus zwei halbkreisförmigen Bauteilen, die um die Welle 1 gelegt und fixiert werden, erfindungsgemäß mit einem Spannband 7 oder einer Schelle.

Die in den Zeichnungen dargestellte Ausführungsform stellt lediglich eine bevorzugte Ausführung der Erfindung dar. Die Erfindung umfasst auch andere Ausführungsformen, bei denen beispielsweise das Wellenlager als Wälzlager ausgebildet ist.

## Patentansprüche

1. Vorrichtung mit einer drehbaren Welle (1) und einem feststehenden Gehäuse (2), wobei die Welle (1) mit Hilfe zumindest eines Wellenlagers (3) im Gehäuse (2) gelagert ist und wobei das Wellenlager (3) mit einem Schmiermittel, vorzugsweise Öl, geschmiert ist, wobei auf der Welle (1) neben dem Wellenlager (3) ein Ventilator (4) befestigt ist, durch den bei Rotation der Welle (1) im Bereich (5) zwischen Ventilator (4) und Wellenlager (3) ein Überdruck erzeugbar ist, **dadurch gekennzeichnet, dass** der Ventilator (4) aus mehreren Teilen besteht, die um die Welle (1) gelegt werden und die über ein Spannband (7) oder eine Schelle mit der Welle (1) verbunden sind.

2. Vorrichtung nach Anspruch 1, **dadurch gekennzeichnet, dass** es sich bei der Welle (1) um die Welle (1) einer elektrodynamischen Maschine, vorzugsweise eines Generators, handelt.

3. Vorrichtung nach Anspruch 1 oder 2, **dadurch gekennzeichnet, dass** der Bereich (5) zwischen Ventilator (4) und Wellenlager (3) von einem Ring (6) begrenzt ist.

4. Vorrichtung nach Anspruch 3, **dadurch gekennzeichnet, dass** der Ring (6) den Ventilator (4) teilweise überdeckt.

5. Vorrichtung nach Anspruch 3 oder 4, **dadurch gekennzeichnet, dass** der Ring (6) mit dem Gehäuse (2) verbunden oder ein Teil davon ist.

6. Vorrichtung nach einem der Ansprüche 1 bis 5, **dadurch gekennzeichnet, dass** das Wellenlager (3) ein Gleitlager ist.

7. Verfahren zur Verminderung von Schmiermittel-Leckagen an Wellenlagern (3) bei rotierenden Wellen (1), wobei auf der Welle (1) neben dem Wellenlager (3) ein Ventilator (4) befestigt wird, sodass bei der Rotation der Welle (1) durch den Ventilator (4) ein Überdruck vor dem Wellenlager (3) erzeugt wird, **dadurch gekennzeichnet, dass** der Ventilator (4) aus mehreren Teilen besteht, die um die Welle (1) gelegt und fixiert werden und die mit Hilfe eines Spannbandes (7) oder einer Schelle an der Welle (1) befestigt werden.

8. Verfahren nach Anspruch 7, **dadurch gekennzeichnet, dass** der Ventilator (4) auf der Welle (1) befestigt wird, ohne dass dazu die Welle (1) aus dem Wellenlager ausgebaut werden muss.

## Claims

1. Device with a rotatable shaft (1) and a fixed housing (2), where the shaft (1) is supported in the housing (2) with the aid of at least one shaft bearing (3) and where the shaft bearing (3) is lubricated with a lubricant, preferably oil, where a fan (4) that can generate overpressure in the area (5) between the fan (4) and the shaft bearing (3) when the shaft (1) rotates is secured to the shaft (1) beside the shaft bearing (3), **characterised in that** the fan (4) comprises several parts that are placed around the shaft (1) and connected to the shaft (1) with a tightening strap (7) or a clamp.

2. Device according to Claim 1, **characterised in that** the shaft (1) is the shaft (1) of an electrodynamic machine, preferably a generator.

3. Device according to Claim 1 or 2, **characterised in that** the area (5) between the fan (4) and the shaft bearing (3) is delimited by a ring (6).

4. Device according to Claim 3, **characterised in that** the ring (6) partly overlays the fan (4).

5. Device according to Claim 3 or 4, **characterised in that** the ring (6) is connected to the housing (2) or a part of it is.

6. Device according to one of Claims 1 to 5, **characterised in that** the shaft bearing (3) is a slide bearing.

7. Method to reduce leakage of lubricant at shaft bearings (3) of rotating shafts (1), where a fan (4) is secured to the shaft (1) beside the shaft bearing (3) such that overpressure is generated in front of the shaft bearing (3) by the fan (4) when the shaft (1) rotates, **characterised in that** the fan (4) comprises several parts that are placed around and secured to the shaft (1) and which are held on the shaft (1) with the aid of a tightening strap (7) or a clamp.

8. Method according to Claim 7, **characterised in that** the fan (4) is secured to the shaft (1) without the shaft (1) having to be dismounted from the shaft bearing (3) for this purpose.

## Revendications

1. Dispositif comprenant un arbre rotatif (1) et un carter fixe (2), l'arbre (1) étant logé dans un carter (2) à l'aide d'au moins un palier (3) et le palier (3) étant lubrifié par un lubrifiant, de préférence de l'huile, sur l'arbre (1) près du palier (3) étant fixé un ventilateur (4), qui permet de produire lors de la rotation de l'arbre (1) dans la zone (5) entre le ventilateur (4) et le palier (3) une pression positive, **caractérisé en ce que** le ventilateur (4) est constitué de plusieurs parties, qui sont disposées autour de l'arbre (1) et qui sont reliées par une bande de serrage (7) ou un collier à l'arbre (1).

2. Dispositif selon la revendication 1, **caractérisé en ce que** l'arbre (1) est celui (1) d'une machine électrodynamique, de préférence d'un générateur.

3. Dispositif selon la revendication 1 ou la revendication 2, **caractérisé en ce que** la zone (5) entre le ventilateur (4) et le palier (3) est limitée par une bague (6) .

4. Dispositif selon la revendication 3, **caractérisé en ce que** la bague (6) recouvre à certains endroits le ventilateur (4).

5. Dispositif selon la revendication 3 ou la revendication 4, **caractérisé en ce que** la bague (6) est reliée au carter (2) ou à une partie de ce dernier.

6. Procédé selon l'une quelconque des revendications 1 à 5, **caractérisé en ce que** le palier (3) est un palier lisse.

7. Procédé de réduction des fuites de lubrifiant sur des paliers (3) lorsque des arbres (1) tournent, sur l'arbre (1) à proximité du palier (3) étant fixé un ventilateur (4) de telle sorte que, lorsque l'arbre (1) tourne, le ventilateur (4) permette de produire une pression positive devant le palier (3), **caractérisé en ce que** le ventilateur (4) est constitué de plusieurs parties qui sont disposées autour de l'arbre (1) et fixées à l'aide d'une bande de serrage (7) ou d'un collier à l'arbre (1).

8. Procédé selon la revendication 7, **caractérisé en ce que** le ventilateur (4) est fixé à l'arbre (1) sans, pour cela, devoir démonter l'arbre (1) du palier.
